# EUROPEAN PATENT APPLICATION

(11) **EP 1 081 832 A2**
(43) Date of publication of application: **07.03.2001**
(21) Application number: 00306959.8
(22) Date of filing: 15.08.2000
(51) Int. Cl.: H02K 21/22, H02K 5/173

(54) **Spindle motor**

(30) Priority: 24.08.1999 JP 23683499
(71) Applicant: MINEBEA CO., LTD., Kitasaku-gun, Nagano-ken (JP)
(72) Inventor: Obara, Rikuro, c/o Minebea Co., Ltd., Miyota-machi, Kitasaku-gun, Nagano-ken (JP); Yoshikawa, Hiroshi, c/o Minebea Co., Ltd., Miyota-machi, Kitasaku-gun, Nagano-ken (JP)
(74) Representative: Haley, Stephen

(57) **Abstract**

A spindle motor having a ring-shaped yoke formed with a cylindrical inner circumference which has a cross sectional area half that of the surface area of the aforementioned salient pole opposing the said permanent magnet, a cylindrical space provided on the inner side of said yoke having a width less than about 5% that of the inner diameter of said yoke and in which is positioned a stator or a rotor flange tower, and a bearing or bearings having external dimensions approximately the same as the inner circumferential diameter of said cylindrical space and one side of a inner race or outer race is connected to said rotor and another is connected to said stator pole side.

## Description

The present invention relates to a spindle motor structure, and more specifically to a highly shock-resistant spindle motor structure suitable for use in portable devices.

In recent years, hard disk drives, employed as magnetic storage devices, have increasingly and rapidly become more compact, higher-speed and capable of storing larger amounts of data. In response to these trends, there is a strong demand for smaller and thinner spindle motors. Recently, hard disk drive spindle motors have become as thin as a few millimeters, while rotational speeds now exceed 10,000 rpm. The requirements for such spindle motors involve a reduction in size and thinness for the individual components making up the motor, and this has had the effect of reducing the rigidity of these parts and thus reducing the efficiency and performance of the whole motor structure.

This reduction in size and thickness has meant that various kinds of office equipment employing built-in hard disk drives can be made more conveniently portable and simpler to handle. However, compared to equipment not portable and used in a fixed position, such hard disk drives and the spindle motors from which they are constructed must face far stricter conditions regarding the frequency and magnitude of the vibrations and impacts which they must meet. Because of this, as spindle motors are made smaller and thinner, the requirement has grown for bearing structures which are more resistant to vibration and shock, since this is the part of the motor that is most vulnerable to damage from external vibration or shock.

The present invention has the objective of solving the technological problem described above by providing a spindle motor structure for mounting in portable devices which is more resistant to shock and vibration than conventional motors.

In order to achieve the above-mentioned objective, the first aspect of the present invention provides, for a spindle motor having a stator pole with a ring-shaped yoke and salient poles having a stator coil projecting from the outside of said yoke in the radiation direction, at least one bearing mounted on the inner side of said ring-shaped yoke, and a rotor rotatively supported by said bearing having a ring-shaped permanent magnet in the opposition to the outer salient pole tip, comprising a ring-shaped yoke formed with a cylindrical inner circumference which has a cross sectional area half that of the surface area of the aforementioned salient pole opposing the said permanent magnet, a cylindrical space provided on the inner side of said yoke having a width less than about 5% that of the inner diameter of said yoke and in which is positioned a stator or a rotor flange tower, and a bearing or bearings having external dimensions approximately the same as the inner circumferential diameter of said cylindrical space and one side of a inner race or outer race is connected to said rotor and another is connected to said stator pole side.

The second aspect of the present invention provides a spindle motor according to main present invention, having the characteristic that said spindle motor is a rotating shaft type.

The third aspect of the present invention provides a spindle motor according to main present invention, having the characteristic that supporters are provided to support the stator poles, said supporters extending into a cylindrical space from the base/Flange to which the stator poles are fixed.

The fourth aspect of the present invention provides a spindle motor according to main present invention, having the characteristic that said spindle motor is a fixed shaft type.

The fifth aspect of the present invention provides a spindle motor according to main present invention, having the characteristic that supporters are provided to support the stator poles, said supporters extending into a cylindrical space from the base/Flange to which the stator poles are fixed, and, extending from the rotor, a bearing tube which engages with the bearing outer race.

The sixth aspect of the present invention provides a spindle motor according to main present invention, having the characteristic that the rotor of said spindle motor is of aluminum construction.

The seventh aspect of the present invention provides a spindle motor according to main present invention, having the characteristic that the rotor of said spindle motor is of iron construction.

FIG 1 is a sectional diagram showing embodiment 1 of the present invention.

FIG 2 is a table comparing the dimensions of the bearing employed in embodiment 1 of the present invention with those of a conventional bearing.

FIG 3 is a load evaluation characteristic chart for the bearing employed in the present invention.

FIG 4 is a load evaluation characteristic chart for a test of the bearing employed in the present invention mounted in a spindle motor.

FIG 5 is a sectional diagram showing embodiment 2 of the present invention.

FIG 6 is an annotated sectional diagram of a single row ball bearing used in the present invention.

FIG 7 is an annotated sectional diagram of a double row RO-type ball bearing used in the present invention.

FIG 8 is a sectional diagram showing embodiment 3 of the present invention.

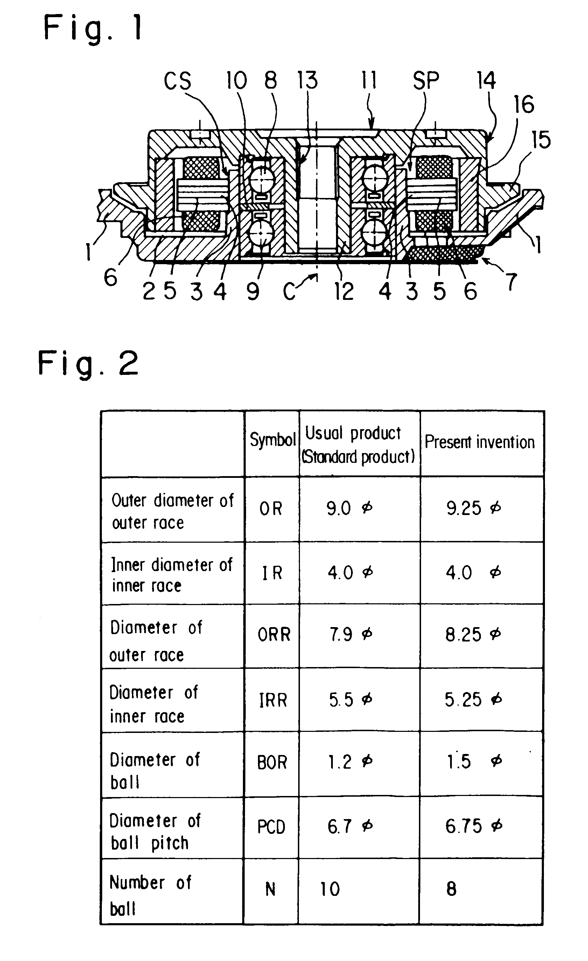

The first embodiment of the present invention will now be described with reference to the explanatory diagrams. FIG 1 is a sectional diagram showing a spindle motor related by the present invention. In this embodiment, the spindle motor is an outer rotor rotating shaft type. The spindle motor related in the present invention is formed in the dish-shaped concave portion 2 which is mounted on base/Flange 1 for the purpose of installing in, for example, a hard disk drive. A thin, cylindrical flange tower 3, forming a narrow cylindrical column surrounding a central cylindrical space, projects upwards from the inner edge of concave portion 3 of base/Flange 1.

Ring shaped yoke 4 abuts the outer circumference of flange tower 3. From the outer circumferential face of said yoke 4 a plurality of salient poles 5 protrude in the radial direction. These salient poles 5 are wound with a plurality of stator coils 6, the windings being arranged in star, delta or other commonly used arrangements, the ends of said windings projecting as terminals 7 from the under side of base/Flange 1. Thus, the salient poles 5 of stator poles SP which are wound on yoke 4 and stator coil 6 are fixed to flange tower 3.

The outer races of upper bearing 8 and lower bearing 9 are force fitted to the inner circumferential face of flange tower 3. Spacer 10 is interposed in the space between the two outer races. Said flange tower 3 is arranged in the cylindrical space CS formed by the space between the inner side of yoke 4 and the bearing outer races.

Rotor 11 has the shape of an inverted shallow dish, from the center of which depends the cylindrically shaped rotating shaft 12, into the inner surface of which is cut screw ridge 13 for the screw which fixes the magnetic disk to the rotor.

The outer circumferential face of said rotating shaft 12 is force fitted to the inner side of the inner races of upper and lower bearings 8, 9.

Accordingly, rotor 11 is rotatively supported on base/Flange 1 by bearings 8, 9. Disk mounting surface 15, for mounting the magnetic disk, is formed from disk holding part 14, formed on the outer circumferential face of rotor 11.

Ring-shaped permanent magnet 16 is inlaid into the inner surface of disk holding part 14 of rotor 11. The tips of salient poles 5 are in opposition to the inner face of said permanent magnet 16, separated from it by a small gap.

When a spindle motor of the type described above is subject to an external shock, the greatest effect of the shock is on the bearing portion. The key to the problem of ensuring stable rotation even when an external shock is applied lies in the bearing construction.

The basic means for increasing the shock resistance of the bearing include using the largest size of bearing possible to increase the overall rigidity of the bearing section, and, to be more detailed, to implement measures so as to, when a shock is received by the bearing, either prevent any pitting of the inner race surface which holds the ball and allows it to rotate, prevent any cracks, scratches or deformations occurring in the ball itself, or minimize deformation in the inner and outer races.

Conventionally, in the design of spindle motor bearing sections, a fundamental problem has been that the bearings to be used must be selected from those having dimensions and construction (inner/outer race dimensions, ball diameter, number of balls, ball PDC, etc.) standardized by the bearing manufacturers.

Because of this there has been the drawback that, in order to improve the shock resistance of a design it has been necessary to use a bearing selected from the standardized range available, or to put it another way, the motor had to be designed to match the available standardized bearings. Further, even if the makers changed the bearing construction in response to strong customer demand for improved shock resistance, such improvements would still be made only within the range of the standardized dimensions and thus the effects of any such improvements would be limited and the desired results could not be fully achieved.

To avoid having to design improvements for increased shock resistance within the limitations imposed by the need to use bearings from a standardized range of dimensions, the present invention does not employ a conventional existing bearing; instead it has an integrated structure which allows the use of bearings specially designed for spindle motors. Such a bearing and spindle motor structure can be designed as a whole unit to optimize its shock resistance.

For this purpose, in the present invention the cross sectional area of the ring-shaped yoke 4 is made to be half the cross sectional area of the salient pole 5, to provide the minimum required magnetic path. By thus limiting the cross sectional area of the yoke 4, it is possible to maximize the diameter of the internal circumference of yoke 4. Accordingly, the outer race external diameter of the bearing arranged on the inner circumference of said yoke 4 could be set at the diameter of the internal circumference of yoke 4, but normally flange tower 3 is attached to the inner surface of yoke 4 for the purpose of retaining the stator and the bearing. This flange tower 3 must be of sufficient strength to support these items. In a normal design, when the base/Flange 1 is formed from aluminum, it is sufficient for the flange tower to be made either about 5% of the inner diameter of the yoke 4 or half its thickness, and when the base/Flange 1 is formed from soft iron, the flange tower can be made with about half the thickness required when the base/Flange is aluminum. Accordingly, the design diameter of the outer race of upper and lower bearings 8, 9 can be set to a size about 95% of the inner surface of yoke 4.

The present invention further enhances the shock resistance of the spindle motor by improving the shock resistance of the bearing structure itself. In other words, within the space allowed for the bearing, the ball pitch diameter (PCD), ball size and number of balls used can be designed to have the largest dimensions possible in the allowed space. By improving the resistance of the ball race surface to fretting due to the pressure of an impact load, improving the ability to disperse surface pressure on affected parts, and increasing the rigidity of the inner and outer races themselves, the resistance to deformation can be enhanced. Furthermore, by increasing the hardness of the ball itself by increasing the size of the ball used, both increased resistance to pitting and increased resistance to deformation can be achieved.

In the spindle motor shown in FIG 1, the disk holding part 14 has a diameter of 45 mm. FIG 2 shows the actual dimensions of the bearing used in this structure and for comparison, gives the dimensions of the various parts of a bearing used in a similarly sized conventional spindle motor.

As can be seen from FIG 2, for the conventional structure, the inner race inner diameter and outer race outer diameter have standardized dimensions.

This limits the range in which the ball diameter, ball pitch diameter, number of balls, etc. can be increased, and so the objective of improving resistance to shock cannot be sufficiently realized. In contrast, the present invention, as shown by the figures in FIG 2, allows the optimal dimensions for the ball diameter, ball pitch diameter, number of balls, etc. to be predetermined to achieve the maximum shock resistance, and the structure and dimensions of the inner race inner diameter and outer race outer diameter of the spindle motor can be adjusted to match these. (Note that in the example given, the inner race dimensions are not changed).

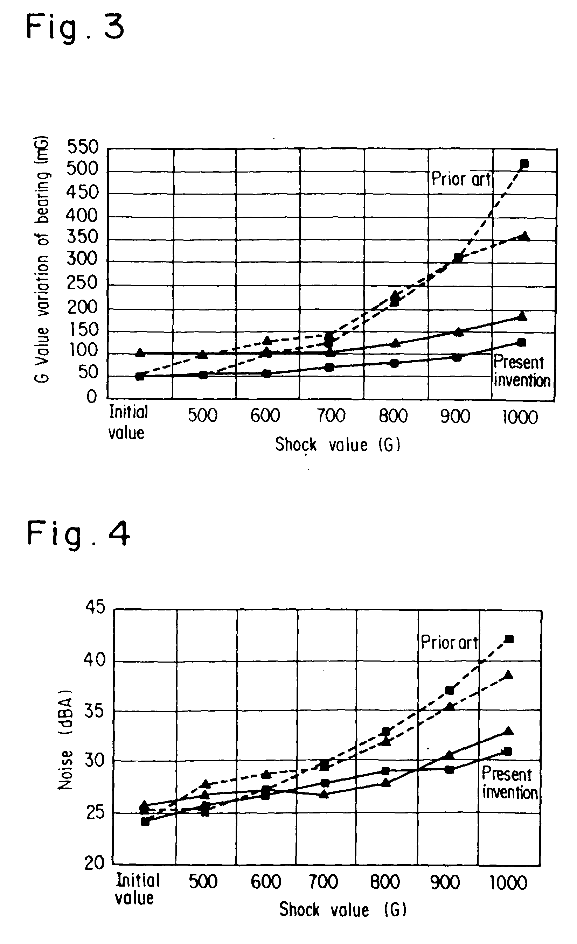

FIGS 3 and 4 compare the results of shock resistance tests made on the spindle motors described in FIG 2 using a conventional bearing and using the present invention. FIG 3 shows the results of a test on the bearings before installation into a spindle motor. The amount of rotational vibration caused by the damage to the rotating parts resulting from this shock in measured by a G meter, and measurement results show the change in bearing G value (mG) for each value of applied shock (G). FIG 4 shows a test with the bearings installed in a spindle motor. Shock is applied, and after the shock the rotational noise of the spindle motor is measured to show the change in noise values for each value of applied shock.

The results of these tests show that with a conventional structure, for both G value variation (FIG 3) and noise variation (FIG 4) the greater the value of applied shock is over the initial value, the greater will be the variation in these values. In contrast, the results for the present invention show that, even for large shock values, the amount of variation in the noise and G value is extremely small compared to the conventional structure, and that any variation from the initial value is barely noticeable (for both noise and G value) until the applied shock exceeds about 700 G. For applied shock levels of 700 G and above, the values of noise and G for the conventional structure show a very large difference from those for the present invention. Small variation in noise and G value compared to the initial values means that the rotational characteristics of the motor are little affected by applied shock, and shows that the shock resistance provided by the present invention is greatly improved over that of conventional structures. Especially, these tests show that the present invention is greatly superior in shock resistance when the applied shock becomes large, and thus the present invention will be highly suitable for the requirements of future devices needing even greater shock resistance.

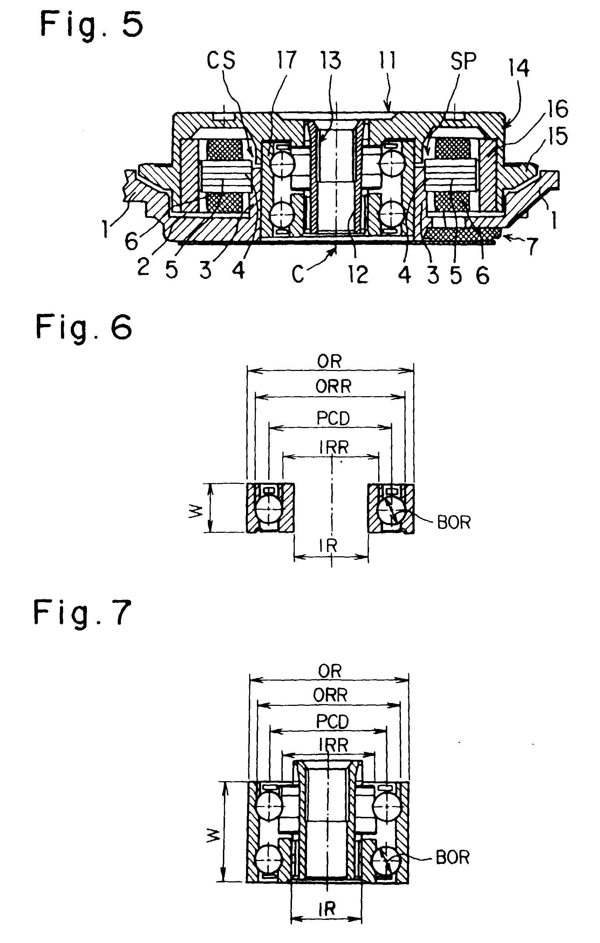

FIG 5 is a sectional diagram showing another embodiment of the present invention. This embodiment uses a double row RO-type ball bearing 17 instead of the single row ball bearings 8, 9 shown in FIG 1, but otherwise employs the same structure as shown in FIG 1. In this spindle motor also, the diameter of the outer race of said bearing 17 can be designed to be 95% of the inner diameter of yoke 4, and so, in a similar fashion to the embodiment shown in FIG 1, the shock resistance provided by this embodiment is substantially improved over that provided by conventional structures.

FIGS 6 and 7 show annotated cross sections through a single row ball bearing and a double row RO-type ball bearing. In FIG 7, the symbol W refers to the width of the outer race of the double row RO-type ball bearing.

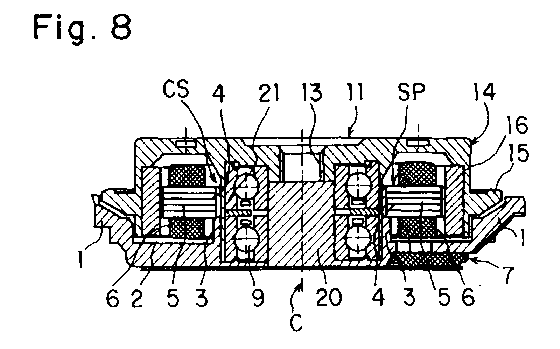

The above embodiments of the present invention are suitable for rotating shaft type spindle motors. The embodiment shown in FIG 8 is suitable for use in fixed shaft type spindle motors. In this embodiment, a fixed shaft 20 protrudes from the center of the concave section of base/Flange 1. The inner race of bearings 8, 9 is fitted around the outer circumference of fixed shaft 20. A gap is formed between the inner side of flange tower 3 which projects from base/Flange 1 and the outer race of upper and lower bearings 8, 9. Bearing tube 21 depends from rotor 11 in the direction of said gap, and the inner side of bearing tube 21 is fitted to the outer races of upper and lower bearings 8, 9. Accordingly, rotor 11 is rotatively supported on base/Flange 1 by upper and lower bearings 8, 9 which are arranged in the space between fixed shaft 20 and bearing tube 21. In this embodiment also, the cross sectional area of yoke 4 is half the surface area of the above mentioned salient pole opposing the said permanent magnet, and there is a cylindrical space in which is positioned a stator flange tower or rotor flange tower having a width within about 5% that of the width of the inner side of said yoke 4. In the same way as described for the embodiment mentioned earlier, the basic means for increasing the shock resistance of the bearing include using the largest size of bearing possible to increase the overall rigidity of the bearing section, and, to be more detailed, to implement measures so as to, when a shock is received by the bearing, either prevent any pitting of the ball race surface which holds the ball and allows it to rotate, prevent any cracks, scratches or deformations occurring in the ball itself, or minimize deformation in the inner and outer races.

While the present invention has been described in connection with the above-mentioned embodiments, it will be understood that various changes and applications can be made therein within the spirit of the present invention, and these changes and applications are not excluded from the scope of the present invention.

As described in detail above, the present invention provides a spindle motor for mounting in portable devices which possesses superior resistance to vibration and shock compared to conventional spindle motors, due to the fact that it allows the employment of bearings with the maximum diameter possible to comply with the requirements of the spindle motor designer.

## Claims

1. A spindle motor having a stator pole with a ring-shaped yoke and salient poles having a stator coil projecting from the outside of said yoke in the radiation direction, at least one bearing mounted on the inner side of said ring-shaped yoke, and a rotor rotatively supported by said bearing having a ring-shaped permanent magnet in the opposition to the outer salient pole tip, comprising:
a ring-shaped yoke formed with a cylindrical inner circumference which has a cross sectional area half that of the surface area of the aforementioned salient pole opposing the said permanent magnet;
a cylindrical space provided on the inner side of said yoke having a width less than about 5% that of the inner diameter of said yoke and in which is positioned a stator or a rotor flange tower; and
a bearing or bearings having external dimensions approximately the same as the inner circumferential diameter of said cylindrical space and one side of a inner race or outer race is connected to said rotor and another is connected to said stator pole side.

2. A spindle motor according to Claim 1, characterized in that said spindle motor is a rotating shaft type motor.

3. A spindle motor according to Claim 2, characterized in that supporters are provided to support the stator poles, said supporters extending from the base/Flange to which the stator poles are fixed.

4. A spindle motor according to Claim 1, characterized in that said spindle motor is a fixed shaft type motor.

5. A spindle motor according to Claim 4, characterized in that supporters are provided to support the stator poles, said supporters extending from the base/Flange to which the stator poles are fixed, and extending from the rotor, a bearing tube which engages with the bearing outer race.

6. A spindle motor according to Claim 1, characterized in that the rotor of said spindle motor is of aluminum construction.

7. A spindle motor according to Claim 1, characterized in that the rotor of said spindle motor is of iron construction.
